# EUROPEAN PATENT SPECIFICATION

(11) **EP 1 883 297 B1**
(45) Date of publication and mention of the grant of the patent: **02.07.2014**
(21) Application number: 05850923.3
(22) Date of filing: 29.11.2005
(51) Int. Cl.: A01N 27/00, A01N 25/04, A01N 25/02, A01N 25/30, A01N 61/02, A01P 3/00, A01P 7/04

(54) **COMPOSITION OF AN AGRICULTURAL SPRAY OIL**
ZUSAMMENSETZUNG EINES LANDWIRTSCHAFTLICHEN SPRÜHÖLS
COMPOSITION D'UNE HUILE DE VAPORISATION DANS LE SECTEUR DE L'AGRICULTURE

(30) Priority: 27.05.2005 IN MU06362005
(43) Date of publication of application: 06.02.2008
(73) Proprietor: Indian Oil Corporation Limited, Mumbai 400051, Maharashtra (IN)
(72) Inventor: BHATNAGAR, Pankaj, Faridabad 121006 (IN); POKHRIYAL, Naveen, kumar, Faridabad 121006 (IN); SIVASURIAN, Natarajan, Faridabad 121005 (IN); TIWARI, Ashok, kumar, Faridabad 121006 (IN); DESHMUKH, Vijay, prabhakar, Faridabad 121006 (IN); KANDISSERIL, Jayaprakash, Chellappan, Faridabad 121006 (IN); TYAGI, Babu, Ram, Faridabad 121006 (IN); MALHOTRA, Ravinder, Kumar, Delhi 110092 (IN); VERMA, Ram, Prakash, Faridabad 121006 (IN); RAJE, Niranjan, Reghunath, New Delhi 110049 (IN)
(74) Representative: Grünecker, Kinkeldey, Stockmair & Schwanhäusser
(86) International application number: PCT/IN2005/000386
(87) International publication number: WO 2006/126211

(56) References cited:
- JP-A- 2005 132 773
- US-A- 5 741 502
- US-A- 5 882 658

## Description

The present invention relates to an agricultural spray oil composition comprising paraffinic base oil and suitable emulsifiers. More particularly, the present invention relates to composition of an emulsified hydroprocessed highly paraffnic oil particularly useful for controlling pests and diseases in tea gardens, various plantations, fruit orchards etc, when applied in the form of a emulsion in water.

Although, the use of oils as insecticides has been reported as early as 18^{th} century, it was not until about 1865 that a petroleum distillate (kerosene) was first used against scale insects on orange (*Citrus sinensis* (L.) Osbeck [Sapindales: Rutaceae]) trees. During the same period Cook employed petroleum oil as a soap' emulsion in 1877. Kerosene -soap emulsion, which did not hold the emulsion stable for a practical period of time, was recommended during 1877, but a more stable soap-oil emulsion was used in 1882.

Petroleum oil along with a variety of emulsifiers and their combinations have been used to manufacture the spray oils for agricultural applications. A spray solution for the prevention and control of plant pests and diseases containing tar acids was disclosed **(**GB 2023424**),** which was harmless towards the plants at the concentrations used. An herbicide carrier oil composition comprising a major amount of a petroleum hydrocarbon oil having an unsulfonated residue of at least 75 and a minor amount of a vegetable oil is disclosed by Sun Oil Company of Pennsylvania **(**US 3,997,322**).** The spray oil composition provides a particularly improved carrier, which enhances the effectiveness of selective herbicides. Similarly, stabilized dispersions or micronutrients in spray oils are patented by Texaco **(**US 3,982,920**).** *These* compositions also contain horticultural mineral spray oils and are capable of forming a stable emulsion with water by gentle shaking. A non-phytotoxic micronutrient compositions containing oil-soluble over based copper, molybdenum, zinc, manganese or iron naphthenates in a horticultural non-phytotoxic spray oil is patented by Texaco Inc. **(**US 4,125,395**).** Agricultural spray oil containing oxidation inhibitors or peroxide decomposing type composition, which is non-phytotoxic, non-carcinogenic and substantially unaffected in its antioxidant properties by sunlight is patented **(**US 4,125,400**).** They claim that the phytotoxicity of petroleum spray oils can be eliminated or reduced using these compositions. Hydrolytically stable spray oil containing plant assimilating boron compounds for improving plant growth *are disclosed* **(**US 4,155,739**)**. It jas also been disclosed **(**US 4,165,230**)** that phytotoxicity of conventional agricultural spray oils is reduced by the incorporation therein of between 0.10 and 0.25 weight/volume percent of zinc dialkyl dithiophosphate. Workers **(**US 4,192,668**)** have disclosed the spray oil compositions capable of defoliating and/or desiccating the foliage of leguminous plants, which facilitate the harvesting. Compositions were disclosed **(**US 4,440,561**)** containing Bifenox and Linuron in combination with a mineral oil, such as white oil. These compositions show a remarkable synergism of the constituents and are of use as pre-harvest defoliants for crop plants. A novel weed control method and composition containing a mineral oil and adjuvant such as an emulsifier is patented **(**US 4,531,965**)**. Pesticidal compositions comprising the combinations of urea and sulfuric acid dispersed in a hydrocarbon oil and methods for controlling pests are disclosed by Union Oil Company of California **(**US 4,831,056 **&** US 5,185,151**)**. The novel method and compositions are particularly useful for controlling plant pests by applying the useful urea-sulfuric acid components to the plants or to the vicinity of plants occupied or traversed by such pests. A homogenous, essentially non aqueous adjuvant composition comprising a spray oil and a surfactant blend of a sorbitan fatty acid ester, a polyethoxylated sorbitan fatty acid ester and an alkylaryl polyethoxy phosphate ester buffering agent is disclosed by Helena Chemical Company **(**US 5,178,795**)**. The disclosed composition maintains the pH of the spray solution within a desired range even in the presence of alkaline waters typically used in spray solutions. Homogeneous, essentially non aqueous adjuvant compositions with buffering capability are disclosed by Helena Chemical Company( US5,393,791**,** US 5,741,502 **and** US 5,580,567 ). Alkylsiloxanes as adjuvant for agricultural use are disclosed by Murphy etal. (US 5,561,099 **)**. These potentiate spreading of mineral or vegetable oils or oil-containing emulsions in dormant spray oils, crop oil concentrates, pesticides, and the like on difficult-to wet surfaces such as waxy leaf cuticles and arthropod exoskeletons. An environmentally compatible aquatic herbicidal composition comprising at least one surfactant and at least one high terepene containing natural oil to effectively control target aquatic vegetation including Red Azolla, Salvinia Molesta and Lemna is disclosed **(**US 5,753,593**.)** Treatments are disclosed for killing lice and lice eggs, which comprise formulations of one or more terpenes in aqueous solutions by XiMed Group PLC **(**US 5,977,186**)**. Aqueous spray compositions with reduced spray drift comprising a water-soluble poly(ethylene oxide) and a surfactant selected from the group consisting of a sulfonate surfactant and a sulfate surfactant are disclosed by American Cyanamid Company **(**US 6,214,771**)**. Methods and compositions are disclosed for treating clothing, pillows, bedding, furniture, rugs or carpets for dust mites **(** US 6,500,445**)**. Non-toxic aqueous compositions contain one or more surfactants high terpene oils and a monohydric alcohol. Technique for emulsifying highly saturated hydroisomerized fluids are patented **(**US 6,515,031 **&** US 6,673,360**)**. The preferred emulsifier blend includes ethoxylated alcohols containing hydrocarbons of C₁₀-C₁₆ and preferably having on average at least 2.8 ethoxy and/or alcohol groups per chain and a glycerol mono- and/or dioleates, preferably in a ratio of from 9:1 to 4:6. These emulsion blends are particularly useful when mixed with hydroisomerized oils and water, for subsequent application as a spray oil to agricultural crops. The emulsion blends of the invention also find particular utility when mixed with conventional spray oils and hard water. A non-toxic aqueous pesticide composition and method are disclosed by Citrus Oil Products, Inc. ( US 6,582,712**)** for controlling insects and parasites on plants. The pesticide contains at least one surfactant and at least one high terpene containing natural oil to effectively control insects and parasites, such as darkling beetles, lice, ticks, mites, flies, aphids, mosquitoes and chiggers. JP-A-2005132773 discloses an emulsifier for agricultural machine oil emulsions comprising (A) an arkylsulfonic acid salt, (B) an ester-based nonionic surfactant, (C) an nonionic surfactant selected from an ether-based aliphatic nonionic surfactant and an amino-based nonionic surfactant and (D) 1-10 wt.% of water. US-A-5882658 (A) discloses a composition which makes it possible, in particular, to combat photo-induced ageing of the skin and/or to combat skin blemishes, this composition containing, in a cosmetically and/or dermatologically acceptable medium, at least one saccharide ester of ascorbic acid and at least one saccharide ester of rutin, the phase of this medium having a pH of from 4 to 6.

It can be seen from the prior art that a large number of combinations of petroleum oils and emulsifiers have been used for making spray oils. Different companies have patented these for a variety of agricultural spray oils for use in some of the crops but detailed evaluations on different crops are not reported in the prior art.

Efforts are therefore, made to develop an agricultural spray oil for controlling pests, insects and diseases in a variety of plantations, orchards, agricultural fields, etc. Efforts are also made to develop a agricultural oil composition using hydro processed highly paraffinic oil and a new set of emulsifiers comprising Oleyl/Cetyl (C16-C18) alcohol polyglycol ether (3.5 to 6.5 ethoxy groups per carbon chain) and a combination of sorbitan mono oleate with and without polyoxyethylene sorbitan monooleate and/or poly oxyethylene mono sterate.

Therefore, an object of this invention is to propose an agricultural spray oil composition.

Another object of this invention is to propose an agricultural spray oil composition that can advantageously be used to give good emulsion stability in varying hardness of water.

Yet another object of this invention is to propose an agricultural spray oil composition, which is designed using highly paraffinic petroleum oils and suitable emulsifiers having unsulphonated residue of more than 95.

A further object of this invention is to propose an agricultural spray oil composition which is readily miscible with water and which form milky emulsion.

A still further object of this invention is to propose a Agricultural spray oil composition which when used in agricultural applications, provides excellent control of pest, mites, insects etc.

Another object of this invention is to propose a composition for agricultural spray oil which is also helpful in controlling plant diseases.

Yet another object of this invention is to propose an agricultural spray oil composition which is eco friendly highly bio-degradable, non-toxic to humans and non-phytotoxic to plants.

A further object of this invention is to propose an agricultural spray oil, which is suitable for organic farming.

A still further object of this invention is to propose an agricultural spray oil which can effectively control red spider mite, pink mite and purple mites in tea plantations, mustard aphids in mustard crop, San Jose scale in apple, mango hopper and sooty mould in mango crop and various other insects, pests and plant diseases in different agricultural crops like vegetables; fruits, pluses, cotton, food grain, coconut, rubber plants etc.

Another object of this invention is to propose agricultural spray oil, which can be used in combination with common insecticides and pesticides etc. under integrated pest management program.

Today, agriculture is one of the biggest industries in the world and it consumes large quantity of chemicals as insecticides, pesticides, fertilizers etc. The area of cultivation and productivity of various crops have increased considerably in recent times. Despite high productivity, agro industry suffers huge loses in production due the damage to the crops by insects, pests, pathogens etc. The magnitudes of losses have also increased manifold with the increases in productivity.

Agricultural industry is consuming a variety of chemicals as insecticides, pesticides, herbicides etc. to control pests and plant diseases. Though, the use of these chemicals offer powerful incentives in the form of excellent control of pests/insects/diseases, increased yield and high economic returns, they have serious drawbacks such as high cost, development of resistance to pesticides by the pest, resurgence of pests, outbreak of secondary pests, harmful effects on human health and environment, and presence of undesirable residues.

Petroleum oils are being used as spray oils throughout the world for controlling insects/pests and certain plant diseases. They have gained importance in recent times due to development of environmental friendly paraffinic oils. Improved quality of petroleum oils was achieved due to tremendous improvement in refining techniques such as hydrocracking, hydro processing, hydro-dewaxing etc.

The use of petroleum oils is more than a century old. The use of such oils is considered more user friendly and environmentally acceptable. The history of use of these oils goes back to the 18^{th} century. As early as 1880, kerosene-soap emulsions were used for control of aphids and other soft-bodied insects. By 1923 the successful use of a 2% emulsion of light lubricating oil against the San Jose scale was reported. Since then more refined oils containing reduced level of aromatics and sulfur compounds have been developed and field tested with more effective results. Various types of paraffinic and other oils in the form of water-mix spray oil or as neat oils have been used to control insects/mites/ pests on various plants and trees. Petroleum based agricultural spray oils contain mainly paraffinic and naphthenic compounds. Out of these compounds, paraffins are beneficial to farmers/gardeners because they're more active towards insects and almost non-toxic to plants compared to other oil compounds. The use of spray oils increased considerably after the evolution of new and environmental friendly refinery processes.

The latest generation agricultural oils are based on petroleum fractions manufactured by using advanced refining technologies such as hydro processing (comprising hydro cracking/ hydro isomersation etc.), which eliminate most of the harmful constituents such as aromatics, sulphur and polar compounds in the oil and which yield a petroleum oil rich in environmental friendly paraffins. Besides, improvement in refining techniques, additive chemistry used for formulating spray oils has also undergone sea changes. Today, chemistries are available for making a environmental friendly agricultural spray oils which are water like in colour and have high USR values of >95. Generally, these oils are environmental friendly, non-toxic and non-phytotoxic in nature when used in a proper manner. At present, the use of agricultural spray oils have gained importance due to emergence of the concept of organic farming and there are efforts by farming industry to adopt non-traditional, eco-friendly measures to control various pests/insects and diseases. Petroleum based agricultural spray oils are now becoming an integral part of the integrated pest management program(IPM) for a number of agricultural crops. Their role as a key IPM product for organic farming has also been established.

Although, as per the present requirements hydro processed highly paraffinic oils are most suitable for the agricultural spray oil application but it is difficult to emulsify these oils to get good emulsion properties for spay application on agricultural corps. It is all the more difficult to get a suitable emulsifier with proper solubility in the hydro processed highly paraffinic oil. The list of the components used for making agricultural spray oil are given below in Table-1.

**Table-1 : Components used for making agricultural spray oil**

| **S.No.** | **Components** |
|---|---|
| 1. | Hydro processed paraffinic oil |
| 2. | Polyethylene glycol monooleyl ether |
| 3.. | Ethoxylated fatty amine |
| 4. | Polyoxyethylene sorbitan monooleate |
| 5. | Polyoxyethylene (20)sorbitan trioleate |
| 6. | Sodium bis-2-ethylhexyl-sulphosuccinate |
| 7. | Alkyl phenol ethylene oxide condensate (4.5 EO) |
| 8. | Poly oxyethylene mono state |
| 9. | Fatty alcohol ethoxylate |
| 10. | Oleyl/Cetyl alcohol poly glycol ether (3.5 to 6.5 ethoxy groups per carbon chain) |
| 11. | Sorbitan monooleate |

The properties of hydro processed paraffinic petroleum oil used for developing agricultural spray oil is given in Table-2:

**Table-2 : Properties of Hydro Processed Paraffinic Petroleum Oil**

| **S.No.** | **Quality Test** | **Property of Oil** |
|---|---|---|
| 1. | Appearance | Clear Bright |
| 2. | Colour | <0.5 |
| 3. | Density @ 15 Deg.C., g/ml | 0.84 |
| 4. | Kinematic Viscosity @ 40 Deg.C., cSt | 15.5 |
| 5. | Sulphur, ppm | < 10 |
| 6. | Saturates, % wt | >99.9. |
| 7. | Aromatics, % wt | <0.2 |

In order to get a agricultural spray oil with good emulsion characteristics, a combination of emulsifiers along with above petroleum oil was used.

The present invention provides an agriculture spray oil composition to be used as spray of oil in water emulsion for controlling pests and diseases of various crops comprising 90 to 99 wt% of hydroprocessed paraffinic oil, 1.0 to 5.0 wt% of oleyl/cetyl (C16-C18) alcohol polyglycol ether (3.5 to 6.5 ethoxy groups per carbon chain) as a non-ionic emulsifier and optionally at least one other nonionic emulsifier selected from sorbitan monooleate, polyoxyethylene sorbitan monooleate and polyoxyethylene monostearate, wherein the concentration of polyoxyethylene sorbitan monooleate is up to 2.0%, the concentration of sorbitan monooleate is up to 2% and the concentration of polyoxyethylene monostearate is up to 1.5%.

In a preferred embodiment, the agriculture spray oil composition has a ratio of oleyl/cetyl (C16-C18) alcohol polyglycol ether (3.5 to 6.5 ethoxy groups per carbon chain) to other said nonionic emulsifier(s) of approximately 3.5:1.

The agricultural spray oil of the present invention form milky emulsion when mixed with water. The emulsion so formed can be employed for spray application in agricultural crops for controlling of pests, mites, diseases in tea, mango, apple, mustard, other fruit crops, food crops, plantations, flowers, vegetables etc.

The process of evaluating and identifying a preferred composition of agricultural spray oil is further described below:

In order to establish the suitability of the developed Agricultural spray oil, a number of compositions using components as given in Table-1 were prepared and evaluated for the test emulsion stability and unsulphanated residue tests.

It can be appreciated that only combination of one emulsifier and the hydroprocessed paraffinic oil is not sufficient for making a agriculture spray oil. Therefore, a combination of the emulsifiers was selected based on the chemistry and nature of the emulsifiers to get a composition of emulsifiable hydorprocessed paraffinic oil containing agricultural-spray-oil

In order to make different spay oil compositions, the hydro processed paraffinic oil was taken in a beaker and heated to 30 to 35 deg.C. Now first emulsifier component was added and the blend was stirred for half hrs. Subsequently, other emulsifier components were added and the final blend was stirred for 1 hrs. If no visual separation of the components was observed within two hrs than the blend was used for lab testing. The blends showing separation were not evaluated further. The clear blends showing good emulsion stability i.e. not more than 1.0 ml oil & cream separation were also evaluated for unsulphonated residue and thermal stability tests.

Results of various experiments carried out are given below in example 1 to example 19.

### Example 1

Agricultural spray oil blends prepared using Polyethylene glycol monooleyl ether and Sorbitan monooleate are given in blend 1 to blend 4. Additive separation was observed in all the blends.

| **S. No.** | **Components** | **Blend 1** | **Blend 2** | **Blend 3** | **Blend 4** |
|---|---|---|---|---|---|
| | | **Compositions in % wt** | | | |
| 1 | Hydro processed paraffinic oil | 98.0 | 95.0 | 97.8 | 97.2 |
| 2 | Polyethylene glycol monooleyl ether | 2.0 | 5.0 | 2.0 | 2.0 |
| 3 | Sorbitan monooleate | -- | -- | 0.2 | 0.8 |

| **Properties** | | | | | |
|---|---|---|---|---|---|
| 1 | Appearance | Additive Separation | Additive Separation | Additive Separation | Additive Separation |

### Example 2

Compositions and properties of the agricultural spray oil blends prepared using Polyethylene glycol monooleyl ether and Polyoxyethylene sorbitan monooleate/Polyoxyethylene (20)sorbitan trioleate are given in blend 5 to blend 8. Additive separation was observed in all the blends.

| **S. No.** | **Components** | **Blend 5** | **Blend 6** | **Blend 7** | **Blend 8** |
|---|---|---|---|---|---|
| | | **Compositions in % wt** | | | |
| 1 | Hydro-processed-paraffinic oil | 97.8 | 97.2 | 97.8 | 97.2 |
| 2 | Polyethylene glycol monooleyl ether | 2.0 | 2.0 | 2.0 | 2.0 |
| 3 | Polyoxyethylene sorbitan monooleate | 0.2 | 0.8 | - | - |
| 4 | Polyoxyethylene (20)sorbitan trioleate | - | - | 0.2 | 0.8 |
| **Properties** | | | | | |
| 1 | Appearance | Additive Separation | Additive Separation | Additive Separation | Additive Separation |

### Example 3

Compositions and properties of the agricultural spray oil blends prepared using Polyoxyethylene sorbitan monooleate, Polyoxyethylene (20)sorbitan trioleate and Alkyl phenol ethylene oxide condensate (4.5 EO) are given in blend 9 to blend 12. Hazy blends were obtained; therefore, no further testing was done.

| **S. No.** | **Components** | **Blend 9** | **Blend 10** | **Blend 11** | **Blend 12** |
|---|---|---|---|---|---|
| | | **Compositions in % wt** | | | |
| 1 | Hydro processed paraffinic oil | 95.0 | 95.0 | 95.0 | 95.0 |
| 2 | Polyoxyethylene sorbitan monooleate | 2.0 | 3.75 | - | - |
| 3 | Alkyl phenol ethylene oxide condensate (4.5 EO) | 3.0 | 1.25 | 3.0 | 1.25 |
| 4 | Polyoxyethylene (20)sorbitan trioleate | - | - | 2.0 | 3.75 |
| **Properties** | | | | | |
| 1 | Appearance | Hazy blend | Hazy blend | Hazy blend | Hazy blend |

### Example 4

Composition and properties of the agricultural spray oil blends with varying concentrations of Ethoxylated fatty amine and sodium bis-2-ethylhexyl-sulphosuccinate additives are given below.

| **S. No.** | **Components** | **Blend 13** | **Blend 14** | **Blend 15** | **Blend 16** |
|---|---|---|---|---|---|
| | | **Compositions in % wt** | | | |
| 1 | Hydro processed paraffinic oil | 95.5 | 91.0 | 95.5 | 91.0 |
| 2 | Ethoxylated fatty amine | 2.0 | 4.0 | 1.5 | 3.0 |
| 3 | Sodium bis-2-ethylhexyl-sulphosuccinate | 2.5 | 5.0 | 3.0 | 6.0 |

| **Properties** | | | | | |
|---|---|---|---|---|---|
| 1 | Appearance | Clear yellowish liquid | Clear yellowish liquid | Clear yellowish liquid | Clear yellowish liquid |
| 2 | Emulsion Stability -@ 25-30° C, for 24 hrs at 3% dilution, Oil & Cream separated, in ml | 5.6 | 3.5 | 8.0 | 7.0 |

All the blends have shown poor emulsion stability.

### Example 5

Compositions and properties of the agricultural spray oil blends prepared using Poly oxyethylene mono sterate and Ethoxylated fatty amine are given in blend 17 to blend 20.

| **S. No.** | **Components** | **Blend 17** | **Blend 18** | **Blend 19** | **Blend 20** |
|---|---|---|---|---|---|
| | | **Compositions in % wt** | | | |
| 1 | Hydro processed paraffinic oil | 95.5 | 91.0 | 95.5 | 91.0 |
| 2 | Poly oxyethylene mono sterate | 2.0 | 4.0 | 1.5 | 3.0 |
| 3 | Ethoxylated fatty amine | 2.5 | 5.0 | 3.0 | 6.0 |

| **Properties** | | | | | |
|---|---|---|---|---|---|
| 1 | Appearance | Clear yellowish liquid | Clear yellowish liquid | Clear yellowish liquid | Clear yellowish liquid |
| 2 | Emulsion Stability -@ 25-30° C, for 24 hrs at 3% dilution, Oil & Cream separated, in ml | 5.6 | 3.5 | 8.0 | 7.0 |

All the blends have shown poor emulsion stability.

### Example 6

Compositions and properties of the agricultural spray oil blends prepared using Poly oxyethylene mono sterate, Ethoxylated fatty amine and Polyethylene glycol monooleyl ether emulsifiers are given in blend 21 to blend 24.

| **S. No.** | **Components** | **Blend 21** | **Blend 22** | **Blend 23** | **Blend 24** |
|---|---|---|---|---|---|
| | | **Compositions in % wt** | | | |
| 1 | Hydro processed paraffinic oil | 94.5 | 96.0 | 96.0 | 96.0 |
| 2 | Poly oxyethylene mono sterate | 3.0 | 0.5 | 1.0 | 2.5 |
| 3 | Ethoxylated fatty amine | 2.5 | - | - | - |
| 4 | Polyethylene glycol monooleyl ether | - | 3.5 | 3.0 | 1.5 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 6.0 | 8.0 | 8.1 | 8.2 |

All the blends have shown poor emulsion stability.

### Example 7

Compositions and properties of the agricultural spray oil blends prepared using Poly oxyethylene mono sterate and Polyethylene glycol monooleyl ether emulsifiers are given in blend 25 to blend 28.

| **S. No.** | **Components** | **Blend 25** | **Blend 26** | **Blend 27** | **Blend 28** |
|---|---|---|---|---|---|
| | | **Compositions in % wt** | | | |
| 1 | Hydro processed paraffinic oil | 96.0 | 96.0 | 97.0 | 96.0 |
| 2 | Poly oxyethylene mono sterate | 3.0 | 3.5 | - | - |
| 3 | Polyethylene glycol monooleyl ether | 1.0 | 0.5 | 3.0 | 4.0 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 9.2 | 8.1 | 8.0 | 8.0 |

All the blends have shown poor emulsion stability.

### Example 8

Compositions and properties of the agricultural spray oil blends prepared using Poly oxyethylene mono sterate, Fatty alcohol ethoxylate and Polyethylene glycol monooleyl ether emulsifiers are given in blend 29 to blend 32.

| **S. No.** | **Components** | **Blend 29** | **Blend 30** | **Blend 31** | **Blend 32** |
|---|---|---|---|---|---|
| | | **Compositions in % wt** | | | |
| 1 | Hydro processed paraffinic oil | 96.0 | 97.0 | 95.0 | 96.0 |
| 2 | Poly oxyethylene mono sterate | 2.0 | 1.0 | - | - |
| 3 | Polyethylene glycol monooleyl ether | 2.0 | 1.0 | - | 2.0 |
| 4 | Fatty alcohol ethoxylate | - | 1.0 | 5.0 | 2.0 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 8.1 | 10.9 | 7.6 | 8.3 |

All the blends have shown poor emulsion stability.

### Example 9

Compositions and properties of the agricultural spray oil blends prepared using Poly oxyethylene mono sterate and Polyethylene glycol monooleyl ether emulsifiers are given in blend 33 to blend 36.

| **S. No.** | **Components** | **Blend 33** | **Blend 34** | **Blend 35** | **Blend 36** |
|---|---|---|---|---|---|
| | | **Compositions in % wt** | | | |
| 1 | Hydro processed paraffinic oil | 98.0 | 98.0 | 95.0 | 98.0 |
| 2 | Poly oxyethylene mono sterate | 2.0 | 1.0 | - | - |
| 3 | Fatty alcohol ethoxylate | - | 1.0 | 5.0 | 2.0 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 7.8 | 8.2 | 6.8 | 7.0 |

All the blends have shown poor emulsion stability.

### Example 10

Compositions and properties of the agricultural spray oil blends prepared using Poly oxyethylene mono sterate and oleyl/cetyl (C16-C18) alcohol polyglycol ether emulsifiers are given in blend 37 to blend 40.

| **S. No.** | **Components** | **Blend 37** | **Blend 38** | **Blend 39** | **Blend 40** |
|---|---|---|---|---|---|
| | | **Compositions in % wt** | | | |
| 1 | Hydro processed paraffinic oil | 97.0 | 96.0 | 95.0 | 94.5 |
| 2 | Poly oxyethylene mono sterate | - | - | - | 0.5 |
| 3 | oleyl/cetyl (C16-C18) alcohol polyglycol ether | 3.0 | 4.0 | 5.0 | 5.0 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 8.4 | 5.6 | 4.2 | 0.2 |
| 3 | Unsulphonated residue, % | 97 | 96 | 96 | 97 |
| 4 | Thermal stability | Good | Good | Good | Good |

### Example 11

Compositions and properties of the agricultural spray oil blends prepared using Poly oxyethylene mono sterate and oleyl/cetyl (C16-C18) alcohol polyglycol ether emulsifiers are given in blend 41 to blend 44.

| **S. No.** | **Components** | **Blend 41** | **Blend 42** | **Blend 43** | **Blend 44** |
|---|---|---|---|---|---|
| | | **Compositions in % wt** | | | |
| 1 | Hydro processed paraffinic oil | 94.3 | 97.0 | 97.0 | 97.0 |
| 2 | Poly oxyethylene mono sterate | 0.7 | 0.5 | 1.0 | 1.5 |
| 3 | oleyl/cetyl (C16-C18) alcohol polyglycol ether | 5.0 | 2.5 | 2.0 | 1.5 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 0.2 | 5.8 | 4.1 | 2.3 |
| 3 | Unsulphonated residue, % | 97 | 97 | 97 | 97 |
| 4 | Thermal stability | Good | Good | Good | Good |

### Example 12

Compositions and properties of the agricultural spray oil blends prepared using Sorbitan monooleate and oleyl/cetyl (C16-C18) alcohol polyglycol ether emulsifiers are given in blend 45 to blend 48.

| **S. No.** | **Components** | **Blend 45** | **Blend 46** | **Blend 47** | **Blend 48** |
|---|---|---|---|---|---|
| | | **Compositions in % wt** | | | |
| 1 | Hydro processed paraffinic oil | 95.0 | 95.0 | 97.0 | 97.0 |
| 2 | Sorbian monooleate | 1.0 | 2.0 | 1.0 | 2.0 |
| 3 | oleyl/cetyl (C16-C18) alcohol polyglycol ether | 4.0 | 3.0 | 2.0 | 1.0 |

| **Properties** | | | | | |
|---|---|---|---|---|---|
| 1 | Appearance | Clear liquid | Clear liquid | Clear liquid | year liquid |
| 2 | Emulsion Stability -@ 25-30° C, for 24 hrs at 3% dilution, Oil & Cream separated, in ml | 0.7 | 6.4 | 4.7 | 7.0 |
| 3 | Unsulphonated residue, % | 96 | 96 | 97 | 97 |
| 4 | Thermal stability | Good | Good | Good | Good |

### Example 13

In order to further improve the emulsion stability of the blends ratio of sorbitan mono oleate and oleyl/cetyl (C16-C18) alcohol polyglycol ether were adjusted. Compositions and properties of the agricultural spray oil blends prepared using Sorbitan Monooleate and oleyl/cetyl (C16-C18) alcohol polyglycol ether emulsifiers are given in blend 49 to blend 52.

| **S. No.** | **Components** | **Blend 49** | **Blend 50** | **Blend 51** | **Blend 52** |
|---|---|---|---|---|---|
| | | **Compositions in % wt** | | | |
| 1 | Hydro processed paraffinic oil | 94.7 | 94.5 | 94.3 | 94.1 |
| 2 | Sorbitan monooleate | 0.3 | 0.5 | 0.7 | 0.9 |
| 3 | oleyl/cetyl (C16-C18) alcohol polyglycol ether | 5.0 | 5.0 | 5.0 | 5.0 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 0.4 | 0.3 | 0.3 | 0.7 |
| 3 | Unsulphonated residue, % | 97 | 97 | 97 | 97 |
| 4 | Thermal stability | Good | Good | Good | Good |

All the blends have shown better emulsion stability.

### Example 14

Compositions and properties of the agricultural spray oil blends prepared using polyoxyethylene sorbitan monooleate and oleyl/cetyl (C16-C18) alcohol polyglycol ether emulsifiers are given in blend 53 to blend 56.

| **S. No.** | **Components** | **Blend 53** | **Blend 54** | **Blend 55** | **Blend 56** |
|---|---|---|---|---|---|
| | | **Compositions in % wt** | | | |
| 1 | Hydro processed paraffinic oil | 94.9 | 94.5 | 94.0 | 93.0 |
| 2 | Polyoxyethylene sorbitan monooleate | 0.1 | 0.5 | 1.0 | 2.0 |
| 3 | oleyl/cetyl (C16-C18) alcohol polyglycol ether | 5.0 | 5.0 | 5.0 | 5.0 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 0.1 | 0.2 | 3.7 | 4.2 |
| 3 | Unsulphonated residue, % | 97 | 97 | 97 | 97 |
| 4 | Thermal stability | Good | Good | Good | Good |

### Example 15

Compositions and properties of the agricultural spray oil blends prepared using Polyoxyethylene sorbitan monooleate, Sorbitan Monooleate, Polyoxyethylene sorbitan mono sterate and oleyl/cetyl (C16-C18) alcohol polyglycol ether emulsifiers are given in blend 57 to blend 60.

| **S. No.** | **Components** | **Blend 57** | **Blend 58** | **Blend 59** | **Blend 60** |
|---|---|---|---|---|---|
| | | **Compositions in % wt** | | | |
| 1 | Hydro processed paraffinic oil | 94.5 | 95.1 | 94.2 | 94.8 |
| 2 | Polyoxyethylene sorbitan monooleate | 0.2 | 0.5 | 0.2 | 0.5 |
| 3 | Sorbitan monooleate | 0.2 | 0.2 | 0.5 | 0.5 |
| 4 | Polyoxyethylene sorbitan mono sterate | 0.1 | 0.2 | 0.1 | 0.2 |
| 5 | oleyl/cetyl (C16-C18) alcohol polyglycol ether | 5.0 | 4.0 | 5.0 | 4.0 |

| **Properties** | | | | | |
|---|---|---|---|---|---|
| 1 | Appearance | Clear liquid | Clear liquid | Clear liquid | Clear liquid |
| 2 | Emulsion Stability -@ 25-30° C, for 24 hrs at 3% dilution, Oil & Cream separated, in ml | 0.3 | 0.3 | 0.4 | 0.2 |
| 3 | Unsulphonated residue, % | 97 | 97 | 97 | 97 |
| 4 | Thermal stability | Good | Good | Good | Good |

It is evident form the example 1 to example 15 that a agricultural spray oil.. formulation showing good results in emulsion stability, unsulphonated residue and thermal stability tests can be obtained. But best results are obtained if the hydroprcessed paraffinic oil is in the range of 90 to 99 wt%, oleyl/cetyl (C16-C18) alcohol polyglycol ether is in the range of 1.0 to 5.0%wt and/ or Sorbitan Monooleate is in upto 2.0% and/or Polyoxyethylene sorbitan monooleate is upto 2.0 % wt and/or Poly oxyethylene mono sterate is upto 1.5% wt.

Agricultural spray oil thus obtained has been evaluated extensively in field. The composition so obtained is having almost water like colour, excellent emulsion stability, thermal stability and high bio-degradability besides being non-toxic.

Filed evaluations have been carried out in tea gardens, mango orchards, mustard field and apple orchards. The agricultural spray oil composition when sprayed in the form of a emulsion in water in the concentration range of 0.25% to 3.0% per litre was able to control tea mites in tea plantations, mustard aphid in mustard crop, European red mite and San Jose scale in apple crop and also mango hoppers in mango orchards. The composition is non-phytotoxic towards these crops. The claimed composition is non-toxic in nature.

Toxicity and field evaluation results are given in examples 16 and 19. Only some of the field evaluation data is illustrated in the examples to demonstrate the efficacy of the developed oil as a agricultural spray oil.

### Example 16

The toxicity of the claimed agrospray oil composition was determined as per standard procedure. Results are given below:

| **S.No.** | **Propertiy of Agro Spray Oil** | **Test Result** |
|---|---|---|
| 1. | **Acute Oral LD₅₀ in Rats** | |
| | a) Male, mg/Kg. B. Wt | >5000 |
| | b) Female, mg/Kg. B. Wt | >5000 |
| 2. | **Acute Dermal LD₅₀ in Rabbits** | |
| | a) Male, mg/Kg. B. Wt | >2000 |
| | b) Female, mg/Kg. B. Wt | >2000 |

The results indicate that the developed agorspray oil is non toxic in nature.

### Example 17

The developed agricultural spray oil was extensively evaluated against the red spider mite, phytotoxicity, tainting tests. The required quantity of spray oil was mixed with 450 Its of water/hectare and emulsion so formed was sprayed on tee bushes with the help of hand sprayer. Results are given below:

| **S. No.** | **Product** | **Dosages ml/hectare** | **Number of red spider mite (***Oligonychus coffeae***) pre treatment/ 75 leaves** | |
|---|---|---|---|---|
| | | | **Pre treatment with Agrospray oil** | **After treatment with Agrospray oil** |
| 1 | Agrospray Oil as claimed | 750 | 350 | 79 |
| 2 | Agrospray Oil as claimed | 1000 | 362 | 76 |
| 3 | Agrospray Oil as claimed | 1500 | 345 | 61 |
| 4 | Control (Without Oil) | Nil | 348 | 457 |

The oil was non phytotoxic to the tea plants and no taint was found on the processed black tea.

### Example 18

The developed agricultural spray oil was extensively evaluated against the mango hopper**(*Idoscopus niveosparsus***) & phytotoxicity to mango tree. The required quantity of spray oil was mixed with water and emulsion so formed was sprayed on mango tree with the help of sprayer. Results are given below:

| **S. No.** | **Product** | **Dosages, % wt** | **Number of mango hopper(*Idoscopus niveosparsus*) /panicle** | |
|---|---|---|---|---|
| | | | **Pre treatment with Agrospray oil** | **After treatment with Agrospray oil** |
| 1 | Agrospray Oil as claimed | 1.5 | 5.5 | 3.6 |
| 2 | Agrospray Oil as claimed | 2.5 | 6.3 | 1.1 |

The oil is effective in controlling mango hoppers and it is non- phytotoxic mango trees.

### Example 19

The developed agricultural spray oil was extensively evaluated against the mustard aphid **(*Liaphis erysimi* Kaltenback)** & phytotoxicity to mustard crop. The required quantity of spray oil was mixed with water and emulsion so formed was sprayed on mustard crop with the help of hand sprayer. Results are given below:

| **S. No.** | **Product** | **Dosages, % wt** | **Number of aphid(*Liaphis erysimi* Kaltenback)/plant** | |
|---|---|---|---|---|
| | | | **Pre treatment with Agrospray oil** | **After one week o treatment with Agrospray oil** |
| 1 | Agrospray Oil as claimed | 1.0 | 12.67 | Nil |
| 2 | Agrospray Oil as claimed | 2.0 | 17.50 | Nil |
| 3 | Agrospray Oil as claimed | 3.0 | 14.33 | Nil |
| 4 | Control | - | 15.50 | 38.67 |

The developed Agrospray oil is effective in control ing mustard aphid and is also non phytotoxic towards the mustard plants.

Having described the techniques of the present invention, it can be appreciated that the Agrospray oil as claimed is manufactured using unique combination of the carefully selected emulsifiers and hydroprocessed paraffinic oil. The agricultural spray oil composition described in this invention is non-toxic in nature and it is sprayed on agricultural crops in the form of emulsion in water. It is able to control pests/mites and diseases in the agricultural crops.

### Annexure-1

The details of the lab tests and field evaluation are given below:
- **Emulsion Stability Test** A 3% emulsion of the Agricultural spray oil in water having hardness of 200 ppm is prepared. For making hard water calcium sulphate solution in distilled water of total hardness equivalent to 200 ± 10 ppm in term of calcium carbonate is used. The dilution is prepared by taking required quantity of hard water in a 500 ml conical flask and stirring it with the help of magnetic stirrer. Oil is quickly added to it and continuously stirred for 2 minutes after addition of last drop of Agricultural spray oil. The emulsion so prepared is poured in special flasks with graduated neck and allowed to stand for 24 hrs. at ambient temperature (25 ± 4 deg.C.). At the end of 24 hours period neck of the flask is examined for separation of oil and separated material (Cream) and results are reported to the nearest of 0.1 ml of oil/cream separated as emulsion stability. **(Reference: IP 263-94 test method)**
- **Thermal Stability Tests**
   In the thermal stability test method 75 ml each sample of Agricultural spray oil is stored at 0 deg C. and 50 deg.C., in separate stoppered bottles, in an air oven maintained at 50 ± 1 deg. C. and also in refrigerator maintained at 0 ± 1 deg.C. for 16 hours. At the end of test, bottles are removed from refrigerator and oven and allowed to stand undisturbed to attain a temperature of 27 ± 2 deg.C. for any sign of turbidity, gelling or separation reported as the thermal stability of the oil. **(Reference: P: 100 test method of IS 1448)**
- **Unsulphonated Residue of Spray Oils**
   In the unsulphonated residue of petroleum based plant spray oils a measured volume of sample is shaken with 98.61% sulphuric acid at 100 deg.C. in a Babcock bottle, shaking mechanically for 10 second at 10 minute intervals. The volume of oil not absorbed by the acid is a measure of the unsulphonated residue in the sample. **(Reference: ASTM D 483-00 test method)**
- **Field Evaluations**
   Samples of agricultural spray oil are sprayed in the form of a emulsion in tea plantations, apple orchards, mango orchards, mustard fields etc. and efficacy of the spray oil against the targeted pest/insect/mite or the disease is monitored after the spray. Spray of emulsion is repeated time to time as per the requirement. Phyto-toxicity of the oil is also studied on the sprayed plant /crop.

## Claims

1. An agriculture spray oil composition, to be used as spray of oil in water emulsion for controlling pests and diseases of various crops, comprising 90 to 99 wt% of hydroprocessed paraffinic oil, 1.0 to 5.0 wt% of oleyl/cetyl (C16-C18) alcohol polyglycol ether having 3.5 to 6.5 ethoxy groups per carbon chain as a non-ionic emulsifier and optionally at least one other nonionic emulsifier selected from sorbitan monooleate, polyoxyethylene sorbitan monooleate and polyoxyethylene monostearate, wherein the concentration of polyoxyethylene sorbitan monooleate is up to 2.0%, the concentration of sorbitan monooleate is up to 2% and the concentration of polyoxyethylene monostearate is up to 1.5%.

2. The agriculture spray oil composition of claim 1, wherein the ratio of oleyl/cetyl (C16-C18) alcohol polyglycol ether having 3.5 to 6.5 ethoxy groups per carbon chain to other said nonionic emulsifier(s) is approximately 3.5:1.

## Patentansprüche

1. Landwirtschaftliche Sprühölzusammensetzung, die als Sprühmittel bzw. -nebel einer Öl-in-Wasser-Emulsion zum Bekämpfen von Schädlingen und Krankheiten von verschiedenen Nutzpflanzen verwendet werden soll, umfassend 90 bis 99 Gew.-% hydroprozessiertes Paraffinöl, 1,0 bis 5,0 Gew.-% Oleyl/Cetyl- (C16-C18) -alkohol-Polyglycolether mit 3,5 bis 6,5 Ethoxygruppen pro Kohlenstoffkette als nichtionischer Emulgator und gegebenenfalls wenigstens einen anderen nichtionischen Emulgator, ausgewählt aus Sorbitanmonooleat, Polyoxyethylensorbitanmonooleat und Polyoxyethylenmonostearat, wobei die Konzentration von Polyoxyethylensorbitanmonooleat bis zu 2,0 % beträgt, die Konzentration von Sorbitanmonooleat bis zu 2 % beträgt und die Konzentration von Polyoxyethylenmonostearat bis zu 1,5 % beträgt.

2. Landwirtschaftliche Sprühölzusammensetzung nach Anspruch 1, wobei das Verhältnis von Oleyl/Cetyl- (C16-C18) -alkohol-Polyglycolether mit 3,5 bis 6,5 Ethoxygruppen pro Kohlenstoffkette zu dem (den) anderen nichtionischen Emulgator(en) ungefähr 3,5:1 beträgt.

## Revendications

1. Composition d'huile de pulvérisation agricole, à utiliser comme pulvérisation d'émulsion huile-dans-eau pour la lutte contre les parasites et les maladies de diverses cultures, comprenant 90 à 99 % en poids d'huile paraffinique hydrotraitée, 1,0 à 5,0 % en poids d'un éther de polyglycol et d'alcool oléylique/cétylique (C16-C18) ayant 3,5 à 6,5 groupes éthoxy par chaîne carbonée en tant qu'émulsifiant non ionique et éventuellement au moins un autre émulsifiant non ionique sélectionné parmi le monooléate de sorbitane, le monooléate de sorbitane polyéthoxylé et le monostéarate polyéthoxylé, où la concentration de monooléate de sorbitane polyéthoxylé va jusqu'à 2,0 %, la concentration de monooléate de sorbitane va jusqu'à 2 % et la concentration de monostéarate polyéthoxylé va jusqu'à 1,5 %.

2. Composition d'huile de pulvérisation agricole de la revendication 1, où le rapport de l'éther de polyglycol et d'alcool oléylique/cétylique (C16-C18) ayant 3,5 à 6,5 groupes éthoxy par chaîne carbonée au(x)dit(s) autre(s) émulsifiant(s) non ionique(s) est d'environ 3,5:1.
